Europäisches Patentamt

European Patent Office

Office européen des brevets

(11) Publication number: **0 164 216**
**B1**

(12) **EUROPEAN PATENT SPECIFICATION**

(45) Date of publication of patent specification: **01.06.88**

(51) Int. Cl.⁴: **B 64 C 13/04,** G 05 G 9/04

(21) Application number: **85303079.9**

(22) Date of filing: **30.04.85**

(54) Multi-axis hand operated controller for aircraft.

(30) Priority: **08.05.84 GB 8411667**

(43) Date of publication of application:
**11.12.85 Bulletin 85/50**

(45) Publication of the grant of the patent:
**01.06.88 Bulletin 88/22**

(84) Designated Contracting States:
**DE FR IT**

(56) References cited:
**EP-A-0 095 699**
**GB-A-2 109 905**
**US-A-3 028 126**
**US-A-3 260 826**
**US-A-4 069 720**

(73) Proprietor: **The Secretary of State for Defence in Her Britannic Majesty's Government of the United Kingdom of Great Britain and Northern Ireland Whitehall**
**London SW1A 2HB (GB)**

(72) Inventor: **White, David John**
**31 Bowcombe Ingleside**
**Netley Abbey Hampshire (GB)**
Inventor: **Fortescue, Peter Waddington**
**63 Oakwood Road Eastleigh**
**Southampton Hampshire (GB)**
Inventor: **Zambellas, George**
**20 Hazelhurst Crescent Hills Farm**
**Horsham West Sussex (GB)**

(74) Representative: **Beckham, Robert William et al**
**Procurement Executive Ministry of Defence**
**Patents 1A(4), Room 2014**
**Empress State Building Lillie Road London SW6 1TR (GB)**

Courier Press, Leamington Spa, England.

## Description

The present invention relates to a multi-axis hand operated controller for controlling aircraft motion as defined in the preamble of Claim 1.

The invention particularly relates to controllers for aircraft flight control systems in which electrical or optical signals are carried by wire or optical fibre to control surface actuators, and particularly, though not exclusively, relates to helicopter flight control.

Present fly-by-wire fixed wing aircraft control systems employ force-feel or displacement joystick controllers which have fore-and-aft and transverse axes of motion. An advantage of a fly-by-wire system compared with a system which employs mechanical linkages between, for example, the jockstick and flight controls, is that a wider choice of location of the hand controls is possible so that control ergonomics may be improved. There are a number of disadvantages associated with joystick controllers particularly if use in helicopters is contemplated. The fore-and-aft and transverse axes are provided for pitch and roll control, and a third axis is required for vertical collective control. The latter may be achieved by employing a twist grip on the joystick handle. It has been found that such twist grips are not satisfactory because their sense of operation is not easily or naturally acquired and the wrist motion required gives rise to pilot fatigue. Vertically slideable joystick handles have been proposed for vertical collective control but it has been found that they are susceptible to helicopter vibrations and vertical forces imposed during various flight manoeuvres.

A multi-axis and translational movement controller as described in US—A—3260826 provides a cylindrical hand grip which can be mounted with its major axis extending generally parallel to the pitch axis of an aircraft. Transducers are coupled to the rotation of the hand grip about its major axis and to the translation and rotation of the hand grip along and about an axis perpendicular to the major axis of the hand grip respectively.

The present invention provides a multi-axis hand operated controller which avoids coupling problems such as for example a twist couple inadvertently introduced by a fore-and-aft movement of the arm.

According to the present invention a multi-axis hand operated controller for an aircraft includes a generally cylindrical hand grip mounted with its major axis extending generally parallel to the pitch axis of the aircraft when in a neutral position, a forearm rest associated with the hand grip and extending generally parallel to the aircraft roll axis and transducers coupled to the rotation of the hand grip about its major axis and to the translation and rotation of the hand grip along and about an axis perpendicular to the major axis of the hand grip respectively, characterised in that a first transducer generates pitch control signals when the hand grip is urged in the aircraft roll axis direction, a second transducer generates roll control signals when the hand grip is urged to rotate about an axis which is generally parallel to the aircraft roll axis, and a third transducer generates vertical control signals when the hand grip is urged to rotate about its major axis.

The transducers may comprise force transducers or may be displacement transducers. The control signals may be electrical or optical.

The handgrip may be mounted for true linear movement along the roll axis or for large diameter arcuate movement which approximates over a small arc to linear movement along the roll axis.

The forearm rest may be fixed relative to the aircraft or may be mounted to pivot or slide along the aircraft roll axis to facilitate movement of the hand grip without the introduction of undesired cross coupling.

Two embodiments of the invention will now be described, by way of example only, with reference to the drawings of which:

Figure 1 is a perspective view of a multi-axis hand operated controller for a helicopter;

Figure 2 is a plan view of another multi-axis hand operated controller.

The embodiments are intended for helicopters with fly-by-wire control systems (not shown).

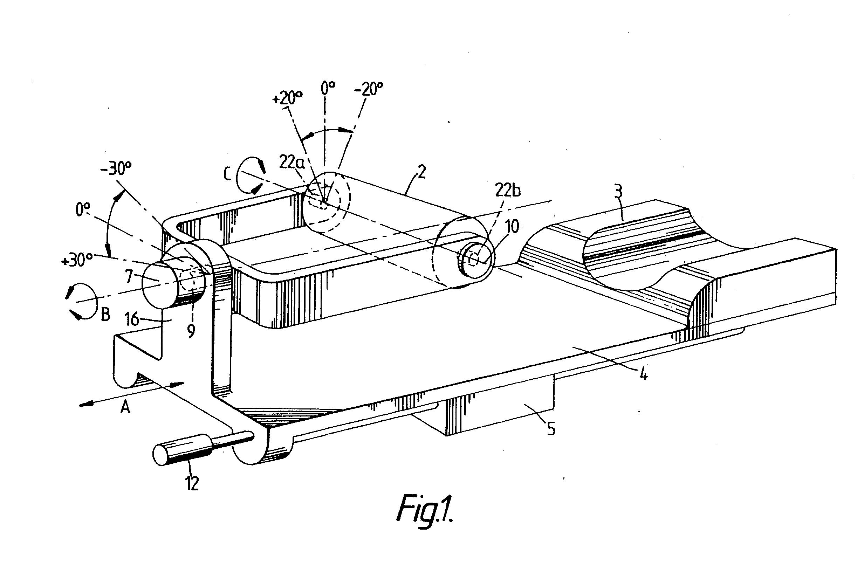

The controller shown in Figure 1 is mounted in a helicopter (not shown) and includes a rigid body 4 which carries an arm rest 3 at the one end. At the other end a pillar 6 carries a transducer 7 which is coupled to a U-shaped member 8 by a short cylindrical shaft 9. The shaft is mounted near the top of the pillar for rotation about an axis 'B' which is parallel to the roll axis of the helicopter. The transducer 7 produces an electrical output in response to rotational displacements in a clockwise or anticlockwise direction of the member 8 about the axis 'B'. The member 8 is free to rotate through an arc of 60° as shown in Figure 1.

A cylindrical hand grip 2 is rotatably mounted on stub axles 22a, 22b between arms of the U-shaped member 8 for rotation about the major axis 'C' of the hand grip, the axis 'C' being normal to the axis B. The member 8 carries a transducer 10 which is coupled to the hand grip via axle 22b and produces an electrical output in response to rotational displacements of the hand grip about the C axis. As indicated in Figure 1 the hand grip 2 is free to rotate through an arc of 40°.

The body 4 is slideably mounted on a grooved carriage 5 fixed to the helicopter so that the body 4 is free to move in direction 'A' parallel to the roll axis of the helicopter. A linear displacement transducer 12 fixed to the helicopter produces an electrical output in response to linear displacement of the body 4 in the direction 'A'.

In operation, when the embodiment of Figure 1 is pushed backwards or forwards in the direction 'A' so as to slide along the carriage 5, a corresponding electrical signal is produced by the transducer 12 which comprises a helicopter pitch cyclic signal. A turning motion of the pilot's wrist produces rotation of the hand grip about the 'B' axis and a corresponding electrical signal is produced by the transducer 7 which comprises a helicopter roll signal. When the pilots twists the hand grip about the axis C a corresponding electrical signal is produced by the transducer 10 which comprises a helicopter collective control signal for ascent or descent.

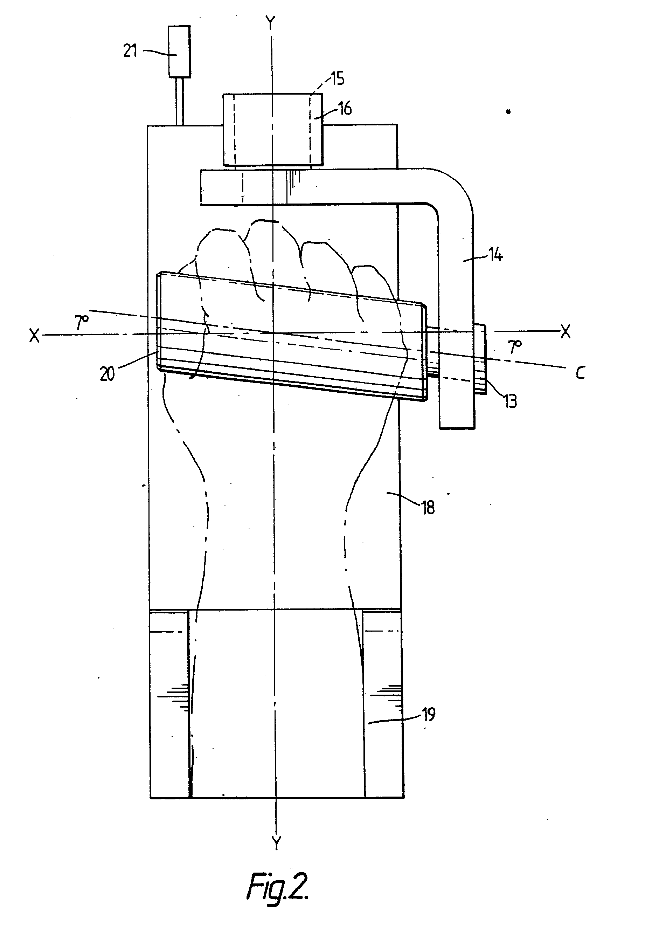

Figure 2 shows a second embodiment of the invention having a body 18, a arm rest 19, a pillar 16, a hand grip 20, and transducers 13, 15 nd 21, which are generally similar in design and function to body 4, arm rest 3, pillar 6, hand grip 2, and transducers 10, 7 and 12, respectively, of the embodiment of Figure 1. The embodiment of Figure 2 has however a simpler, L-shaped member 14, which has the same function as the U-shaped member 8 of Figure 1, and the hand grip 20 is mounted with its axis C at 7° to the axis X parallel to the pitch axis of the helicopter in which the controller is mounted. As shown in Figure 2 the controller is for right hand operation. The inclination of the grip axis and the position of the member 14 would be reversed (i.e. as if rotated by 180° about the Y axis shown in Figure 2,) for a controller for left hand operation. It has been found that by inclining the hand grip axis at a small angle, preferably about 7°, to the axis X, there is less pilot fatigue during prolonged operation of the controller and the possibility of unintentional cross-coupling between axes is minimised.

The embodiments described above have been described by way of example only, and many variations thereof within the scope of the present invention will be apparent to those skilled in the art. For example, the transducers may output light, rather than electrical signals, for a fly-by-light control system. Further, in each of the control axes there may be trimmers as is conventional in other aircraft controllers.

## Claims

1. A multi-axis hand operated controller for an aircraft including a generally cylindrical hand grip (2, 20) mounted with its major axis (C) extending generally parallel to the pitch axis of the aircraft when in a neutral position, a forearm rest (3, 19) associated with the hand grip (2, 20) and extending generally parallel to the aircraft roll axis and transducers (7, 10, 12, 13, 15, 21) coupled to the rotation of the hand grip (2, 20) about its major axis (C) and to the translation and rotation of the hand grip (2, 20) along and about an axis perpendicular to the major axis of the hand grip (2) respectively, characterised in that a first transducer (12, 21) generates pitch control signals when the hand grip (2, 20) is urged in the aircraft roll axis direction (A), a second transducer (7, 15) generates roll control signals when the hand grip (2, 20) is urged to rotate about an axis (B) which is generally parallel to the aircraft roll axis, and a third transducer (10, 13) generates vertical control signals when the hand grip (2, 20) is urged to rotate about its major axis (C).

2. A controller as claimed in claim 1 wherein the transducers (7, 10, 12, 13, 15, 21) comprise force transducers.

3. A controller as claimed in claim 1 wherein the transducers (7, 10, 12, 13, 15, 21) comprise displacement transducers.

4. A controller as claimed in claim 2 or claim 3 wherein the transducers (7, 10, 12, 13, 15, 21) generate electrical control signals.

5. A controller as claimed in claim 2 or claim 3 wherein the transducers (7, 10, 12, 13, 15, 21) generate optical control signals.

6. A controller as claimed in claim 1 wherein the hand grip (2, 20) is mounted for linear movement along the aircraft roll axis direction (A).

7. A controller as claimed in any of claims 1 to 5 wherein the hand grip (2, 20) is mounted for large diameter arcuate movement which approximates over a small arc to linear movement along the aircraft roll axis direction (A).

8. A controller as claimed in any of the preceding claims wherein the forearm rest (3, 19) is fixed relative to the aircraft.

9. A controller as claimed in any of claims 1 to 7 wherein the forearm rest (3, 19) is mounted to slide along the aircraft roll axis direction (A) to facilitate movement of the hand grip (2, 20) without the introduction of cross coupling.

10. A controller as claimed in claim 8 or claim 9 wherein the forearm rest (3, 19) has a groove (5) in the upper surface thereof for receiving the forearm and wherein the groove (5) extends parallel to the aircraft roll axis.

## Patentansprüche

1. Mehrachsen-Handsteuerknüppel für ein Luftfahrzeug, mit einem im wesentlichen zylindrischen Griff (2, 20), der so befestigt ist, daß in seiner Neutrallage seine Hauptachse (C) im wesentlichen parallel zur Nickachse des Luftfahrzeugs verläuft, mit einer Unterarmauflage (3, 19), die dem Griff (2, 20) zugeordnet ist und im wesentlichen parallel zur Rollachse des Luftfahrzeugs verläuft, und mit Meßwertgebern (7, 10, 12, 13, 15, 21), die mit der Rotation des Griffs (2, 20) um seine Hauptachse (C) und mit der Translation bzw. Rotation des Griffs (2, 20) entlang einer bzw. um eine zur Hauptachse des Griffs (2) senkrechte Achse gekoppelt sind, dadurch gekennzeichnet, daß ein erster Meßwertgeber (12, 21) Nicksteuersignale erzeugt, wenn der Griff (2, 20) in Richtung der Luftfahrzeug-Rollachse (A) betätigt wird, ein zweiter Meßwertgeber Rollsteuersignale erzeugt, wenn der Griff (2, 20) so betätigt wird, daß or um eine im wesentlichen parallel zur Luftfahrzeug-Rollachse verlaufende Achse (B) gedreht wird, und ein dritter Meßwertgeber (10, 13) Vertikalsteuersignale erzeugt, wenn der Griff (2, 20) so betätigt wird, daß er um seine Hauptachse (C) gedreht wird.

2. Handsteuerknüppel nach Anspruch 1, wobei die Meßwertgeber (7, 10, 12, 13, 15, 21) Kraftaufnehmer sind.

3. Handsteuerknüppel nach Anspruch 1, wobei die Meßwertgeber (7, 10, 12, 13, 15, 21) Wegaufnehmer sind.

4. Handsteuerknüppel nach Anspruch 2 oder 3, wobei die Meßwertgeber (7, 10, 12, 13, 15, 21) elektrische Steuersignale erzeugen.

5. Handsteuerknüppel nach Anspruch 2 oder 3, wobei die Meßwertgeber (7, 10, 12, 13, 14, 21) optische Steuersignale erzeugen.

6. Handsteuerknüppel nach Anspruch 1, wobei der Griff (2, 20) für eine Linearbewegung entlang der Richtung (A) der Luftfahrzeug-Rollachse befestigt ist.

7. Handsteuerknüppel nach einem der Ansprüche 1—5, wobei der Griff (2, 20) so angeordnet ist, daß er eine bogenförmige Bewegung mit großem Durchmesser ausführen kann, die über einen kleinen Bogen der Linearbewegung entlang der Richtung (A) der Luftfahrzeug-Rollachse angenähert ist.

8. Handsteuerknüppel nach einem der vorhergehenden Ansprüche, wobei die Unterarmauflage (3, 19) relativ zum Luftfahrzeugt festgelegt ist.

9. Handsteuerknüppel nach einem der Ansprüche 1—7, wobei die Unterarmauflage (3, 19) so angeordnet ist, daß sie entlang der Richtung (A) der Luftfahrzeug-Rollachse verschiebbar ist, um die Bewegung des Griffs (2, 20) ohne Einführung einer Kreuzkopplung zu erleichtern.

10. Handsteuerknüppel nach Anspruch 8 oder 9, wobei die Unterarmauflage (3, 19) in ihrer Oberfläche eine Vertiefung (5) zur Aufnahme des Unterarms aufweist und wobei die Vertiefung (5) parallel zur Luftfahrzeug-Rollachse verläuft.

**Revendications**

1. Organe de commande manuelle à plusieurs axes pour aéronef, comprenant une poignée (2, 20) qui est dans son ensemble cylindrique, montée avec son axe principal (C) s'étendant dans son ensemble parallèlement à l'axe de tangage de l'aéronef lorsqu'elle se trouve dans une position neutre, un accoudoir (3, 19) pour reposer l'avant-bras, associé à la poignée (2, 20) et s'étendant dans son ensemble parallèlement à l'axe de roulis de l'aéronef, et des transducteurs (7, 10, 12, 13, 15, 21) couplés à la rotation de la poignée (2, 20) autour de son axe principal (C) et à la translation et à la rotation de la poignée (2, 20) le long d'un axe perpendiculaire à l'axe principal de la poignée (2) et autour de cet axe respectivement, caractérisé en ce qu'un premier transducteur (12, 21) engendre des signaux de commande de tangage lorsque la poignée (2, 20) est forcée dans la direction (A) de l'axe de roulis de l'avion, un second transducteur (15) engendre des signaux de commande de roulis lorsque la poignée (2, 20) est forcée de tourner autour d'un axe (B) qui est dans son ensemble parallèle à l'axe de roulis de l'avion, et un troisième transducteur (10, 13) engendre des signaux de commande verticale lorsque la poignée (2, 20) est forcée de tourner autour de son axe principal (C).

2. Organe de commande suivant la revendication 1 dans lequel les tranducteurs (7, 10, 12, 13, 15, 21) sont constitués par des transducteurs de forces.

3. Organe de commande suivant la revendication 1, dans lequel les transducteurs (7, 10, 12, 13, 15, 21) sont constitués par des transducteurs de déplacements.

4. Organe de commande suivant la revendication 2 ou 3, dans lequel les transducteurs (7, 10, 12, 13, 15, 21) engendrent des signaux électriques de commande.

5. Organe de commande suivant la revendication 2 ou 3, dans lequel les transducteurs (7, 10, 12, 13, 15, 21) engendrent des signaux optiques de commande.

6. Organe de commande suivant la revendication 1 dans lequel la poignée (2, 20) est montée de façon à effectuer un déplacement linéaire le long de l'axe de roulis (A) de l'aéronef.

7. Organe de commande suivant l'une quelconque des revendications 1 à 5, dans lequel la poignée (2, 20) est montée de façon à effectuer un mouvement courbe de grand diamètre qui avoisine sur un petit arc le mouvement linéaire le long de l'axe de roulis (A) de l'aéronef.

8. Organe de commande suivant l'une quelconque des revendications précédentes dans lequel l'accoudoir (3, 19) pour reposer l'avant-bras est fixe par rapport à l'aéronef.

9. Organe de commande suivant l'une quelconque des revendications 1 à 7, dans lequel l'accoudoir (3, 19) est monté coulissant le long de l'axe de roulis (A) de l'aéronef afin de faciliter le mouvement de la poignée (2, 20) sans introduction d'un couplage transversal.

10. Organe de commande suivant la revendication 8 ou 9, dans lequel l'accoudoir (3, 19) comporte une gorge (5) dans sa surface supérieure pour recevoir l'avant-bras, la gorge (5) s'étendant parallèlement à l'axe de roulis de l'aéronef.

Fig.1.

0 164 216

Fig.2.